# EUROPEAN PATENT APPLICATION

(11) **EP 2 653 965 A2**
(43) Date of publication of application: **23.10.2013**
(21) Application number: 13161163.4
(22) Date of filing: 26.03.2013
(51) Int. Cl.: G06F 9/44, G06F 1/32

(54) **Electronic apparatus, method of controlling the same, and computer-readable recording medium**

(30) Priority: 16.04.2012 KR 20120039132
(71) Applicant: Samsung Electronics Co., Ltd, Gyeonggi-do 443-742 (KR)
(72) Inventor: Kim, Hyung-geun, Gyeonggi-do (KR); Chang, Jeom-jin, Gyeonggi-do (KR); Choi, Yun-ho, Gyeonggi-do (KR)
(74) Representative: Walaski, Jan Filip

(57) **Abstract**

An electronic apparatus includes a non-volatile memory, a volatile memory to store an operation of the operating system, a user interface unit to receive an end command to terminate an operation of the operating system, and a control unit to change an operation mode of the operating system to a log off mode and to store operating system data of the log off mode stored in the volatile memory in the non-volatile memory and to cut off power supplied to the electronic apparatus, if the end command is input.

## Description

The present invention relates to an electronic apparatus and a controlling method thereof, and a computer-readable recording medium, and more particularly, to an electronic apparatus to reduce a booting time of a system using a log off mode and a maximum power saving mode, a controlling method thereof, and a computer-readable recording medium.

In a conventional computer system, when the computer system is powered on, a series of booting operations are performed as follows. First, chips of the computer system are initialized, and programs stored in BIOS are copied in a memory. Subsequently, Desktop Management Information (DMI) required for an operating system is initialized and stored in the memory, and a booting disk where an operating system is installed is searched.

Afterwards, the operating system is loaded onto the memory from the booting disk, and the operating system performs initialization of all hardware to set up an environment necessary to drive the operating system.

As described above, the process of hardware initialization is performed repeatedly, going through several steps and thus, a considerable amount of booting time is required.

The present invention relates to an electronic apparatus to reduce a booting time of a system using a log off mode and a maximum power saving mode, a controlling method thereof, and a computer-readable recording medium.

The foregoing and/or other features and utilities of the present invention may be achieved by providing an electronic apparatus having a plurality of operation modes, including a non-volatile memory, a volatile memory for an operation of the operating system, a user interface unit to receive an end command to terminate an operation of the operating system, and a control unit to change an operation mode of the operating system to a log off mode, to store in the non-volatile memory operating system data of the log off mode stored in the volatile memory and to cut off power supplied to the electronic apparatus, if the end command is input.

The user interface unit may display a user interface window to receive a selection of a first end command to perform fast booting or a second end command to perform general booting, and the control unit may change an operation mode of the electronic apparatus to a maximum power saving mode, if the first end command is input.

The user interface unit may include a power button and receive the end command through the power button.

The control unit may terminate at least one of processes in operation in the operating system if the end command is input.

The control unit may change an operation mode of the electronic apparatus to an S3 power saving mode, and if an operation mode of the electronic apparatus is changed to an S3 power saving mode, an operation mode of the electronic apparatus may be changed to an S4 power saving mode without being in a standby mode so that an operation mode of the electronic apparatus is changed to a maximum power saving mode. The S3 power saving mode is advantageous in that its resuming process is fast, whereas the S4 power saving mode is advantageous in that it is not necessary to supply power to the volatile memory continuously. Therefore, the present invention can have the advantages of both modes.

The user interface unit may receive a booting command, and the control unit may restore data of the volatile memory stored in the non-volatile memory to the volatile memory, if the booting command is input.

The control unit may initialize the volatile memory, restore data of a volatile memory stored in the non-volatile memory to the volatile memory, and convert an operation mode of the electronic apparatus to a normal mode, if the booting command is input.

The user interface unit may display a user interface window for user log-in when the electronic apparatus is converted to a normal mode after the booting command.

The non-volatile memory may be a Solid State Drive (SSD).

The foregoing and/or other features and utilities of the present invention may also be achieved by providing a method of controlling an electronic apparatus having a plurality of operation modes, including receiving an end command to terminate an operation of an operating system, if the end command is input, changing an operation mode of the operating system to a log off mode, and storing in the non-volatile memory operating system data of the log off mode stored in the volatile memory and cutting off power supplied to the electronic apparatus.

The method may further include displaying a user interface window to receive a selection of a first end command to perform fast booting or a second end command to perform general booting, and the receiving an end command may include receiving the first end command on the user interface window.

The receiving the end command may include receiving the end command through a power button formed on the electronic apparatus.

The method may further include terminating at least one of processes in operation in the operating system.

The storing in the non-volatile memory operating system data of the log off mode stored in the volatile memory and cutting off power supplied to the electronic apparatus. The cutting off power supplied to the electronic apparatus include changing an operation mode of the electronic apparatus to an S3 power saving mode, and if an operation mode of the electronic apparatus is changed to an S3 power saving mode, changing an operation mode of the electronic apparatus to an S4 power saving mode without being in a standby mode.

The method may further include receiving a booting command, and if the booting command is input, restoring data of the volatile memory stored in the non-volatile memory to the volatile memory.

The restoring may include initializing the volatile memory, restoring data of a volatile memory stored in the non-volatile memory to the volatile memory, and converting an operation mode of the electronic apparatus to a normal mode.

The method may further include, if the electronic apparatus is changed to a normal mode after the booting command, displaying a user interface window to perform a user log-in.

The foregoing and/or other features and utilities of the present invention may also be achieved by providing a computer readable recording medium including a program to execute a method of controlling an electronic apparatus having a plurality of operation modes, including receiving an end command to terminate an operation of an operating system, if the end command is input, changing an operation mode of the operating system to a log off mode, and storing in the non-volatile memory operating system data of the log off mode stored in the volatile memory and cutting off power supplied to the electronic apparatus.

The foregoing and/or other features and utilities of the present invention may also be achieved by providing an electronic apparatus, including a non-volatile memory to store a program to drive the electronic apparatus, a volatile memory to store temporary data, and a control unit to store the temporary data in the non-volatile memory based on an input end mode and to subsequently cut off power to the non-volatile memory and the volatile memory.

The electronic apparatus may further include a user interface unit to allow a user to input the end mode by selecting between a first end mode corresponding to a fast booting operation and a second end mode corresponding to a general booting operation.

If the user inputs a booting command through the user interface unit while the power to the non-volatile memory and the volatile memory is cut off, the control unit may determine whether the first end mode or the second end mode was previously selected and may perform the fast booting operation or the general booting operation based on the determination.

The control unit may supply power to the non-volatile memory and the volatile memory and may transfer the temporary data from the non-volatile memory back to the volatile memory if the fast booting operation was previously selected.

A selection of the first end mode may change an operation mode of the electronic apparatus to a maximum power saving mode, and a selection of the second end mode may turn off all power supplied to the electronic apparatus.

The maximum power saving mode may be a sleep or hibernation mode.

These and/or other features and utilities of the present invention will become apparent and more readily appreciated from the following description of the embodiments, taken in conjunction with the accompanying drawings, of which:
FIG. 1 is view of an electronic apparatus according to an exemplary embodiment of the present invention;
FIG. 2 is a view illustrating an example of a user interface window which can be displayed on a user interface unit;
FIG. 3 is a view to explain an operation mode of an electronic apparatus according to an exemplary embodiment of the present invention;
FIG. 4 is a view to explain an operation to convert a current mode to a maximum power saving mode according to an exemplary embodiment of the present invention;
FIG. 5 is a view to compare a booting operation in an S4 power saving mode of the prior art with a booting operation according to an exemplary embodiment of the present invention;
FIG. 6 is a view to explain an end operation of an operating system according to an exemplary embodiment of the present invention;
FIG. 7 is a view to explain a booting operation according to an exemplary embodiment of the present invention;
FIG. 8 is a flowchart to explain a method of controlling an electronic apparatus according to an exemplary embodiment of the present invention;
FIG. 9 is a flowchart to explain an end operation according to an exemplary embodiment of the present invention; and
FIG. 10 is a flowchart to explain a booting operation according to an exemplary embodiment of the present invention.

Reference will now be made in detail to the embodiments of the present invention, examples of which are illustrated in the accompanying drawings, wherein like reference numerals refer to like elements throughout. The embodiments are described below, in order to explain the present invention by referring to the figures.

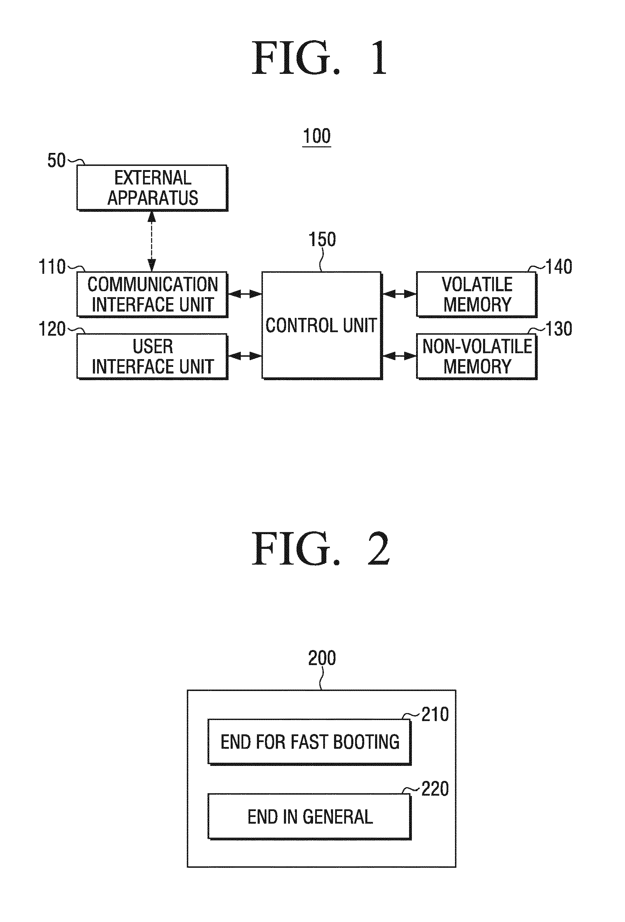

FIG. 1 is view of an electronic apparatus according to an exemplary embodiment of the present invention.

Referring to FIG. 1, the electronic apparatus 100 includes a communication interface unit 110, a user interface unit 120, a non-volatile memory 130, a volatile memory 140, and a control unit 150. Herein, the electronic apparatus 100 may be a PC, a notebook, a tablet, a PMP, a smart phone that performs a booting operation using an operating system, etc., but is not limited thereto.

The communication interface unit 110 is formed to connect the electronic apparatus 100 to an external apparatus 50 via a Local Area Network (LAN), an Internet network, a wireless communication such as GSM, UMTS, LTE, and WiBRO, etc., but it not limited thereto.

The user interface unit 120 may include a plurality of function keys to enable a user to set or select various functions of the electronic apparatus 100, and may display various information provided by the electronic apparatus 100. The user interface unit 120 may include an apparatus to input and output data simultaneously, such as a touch screen, or may include an apparatus that combines a mouse with a monitor, but is not limited thereto.

In addition, the user interface unit 120 may have a power button to receive an end command or a booting command. The power button may be a physical button that is disposed outside of the electronic apparatus 100, a software-based button, a sensor, etc., but is not limited thereto.

Referring to FIGS. 1 and 2, the user interface unit 120 may display a user interface window 200 to select an ending method. Specifically, the user interface unit 120 may display a first area to select a first end mode to perform fast booting and a second area to select a second end mode to perform general booting.

The non-volatile memory 130 stores a program to drive the electronic apparatus 100. Specifically, the non-volatile memory 130 may store a program that includes a group of commands necessary to drive the electronic apparatus 100. The program may include a Master Boot Record (MBR) and an operating system. Specifically, the operating system refers to an operating program to drive the electronic apparatus 100, and the MBR refers to information to identify a location of the operating system during a booting process and load the operating system on a main memory apparatus of a computer. The MBR may be located on a first sector of a storage medium.

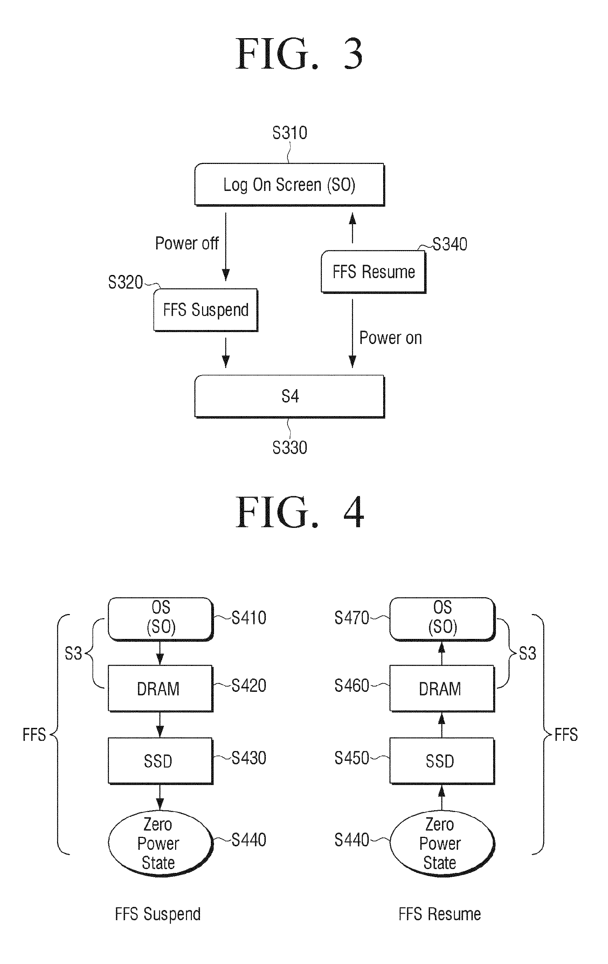

The non-volatile memory 130 may store data stored in the volatile memory 140. Specifically, if a mode of the electronic apparatus 100 is changed to an S4 power saving mode, the data stored in the volatile memory 140 may be stored in a pre-defined area in the non-volatile memory 130. The S4 power saving mode is one example of various operation modes of the electronic apparatus 100, and will be explained in detail with reference to FIGS. 3 and 4. For example, the Advanced Configuration and Power Interface (ACPI) Specification defines various Sleep states, S1 to S4, for ACPI-compliant systems. The non-volatile memory 130 may be a Hard Disk Drive (HDD), a Solid State Drive (SSD) inside of the electronic apparatus 100, a flash memory, an optical disc, a magnetosensitive random access memory (MRAM), etc., but is not limited thereto.

The volatile memory 140 is a memory that requires a continuous supply of power to maintain information and is used as an operational space to speed up the processing of a program while driving an operating system. The volatile memory 140 may be a Dynamic Random Access Memory (DRAM), a Static Random Access Memory (SRAM), etc., but is not limited thereto.

The control unit 150 controls each component of the electronic apparatus 100. Specifically, the control unit 150 may decide an operation mode of the electronic apparatus 100 by determining whether there is a user manipulation and how long a user manipulation has been performed.

In addition, the control unit 150 may control each component of the electronic apparatus 100 to have an operation state corresponding to a determined operation mode. Specifically, the electronic apparatus 100 may include a normal mode, a plurality of power saving modes, and an off mode. Herein, the normal mode is an operation mode where power is supplied to each component to perform a process required by a user, the power saving mode is an operation mode where power supplied to a specific component is cut off or restricted to minimize power consumed in the electronic apparatus 100, and the off mode is a state where the electronic apparatus 100 is not in operation.

The control unit 150 determines a type of end command input by a user. Specifically, the control unit 150 may determine that an end command input by a user is the first end command to perform fast booting or the second end command to perform general booting. Such a determination may be performed via user selection. For example, if the control unit 150 receives a request from a user to input an end command, the control unit 150 may control the user interface unit 120 to display a user interface window as illustrated in FIG. 2 to allow a user to choose from the first end mode to perform the fast booting or the second end mode to perform the general booting. Upon the user's selection of the first or second end mode, the control unit 150 receives the user's selection and proceeds with the selected end mode. Such a selection can also be made before an end command is selected. As such, the control unit 150 may determine the type of end command according to a pre-selected end mode. That is, a particular end mode may be selected as a default.

If an end command to end an operating system is input by the user through the user interface unit 120, the control unit 150 changes the operation mode of the operating system to a log off mode and the operation mode of the electronic apparatus to a maximum power saving mode. Specifically, if an end command (i.e., an end command according to the first end mode) is input by the user through the user interface unit 120, the control unit 150 may store data stored in the volatile memory 140 in the non-volatile memory 130 and cut off power supplied to the non-volatile memory 130, the volatile memory 140, and the control unit 150. Accordingly, if at least one of program or process is currently in operation, the control unit 150 may end the program or process. The control unit 150 may store information regarding an end mode in Basic Input/Output System (BIOS).

If a booting command is input through the user interface unit 120, the control unit 150 may determine whether the previous end is an end according to the first end mode or the second end mode. Specifically, the control unit 150 may determine whether the previous end is an end according to the first end mode or the second end mode using information regarding an end mode stored in BIOS.

If it is determined that the previous end was an end according to the first end mode, the control unit 150 may perform the fast booting operation by restoring data of the volatile memory stored in the non-volatile memory 130 back into the volatile memory 140. In contrast, if it is determined that the previous end was an end according to the second end mode, the control unit 150 may perform the general booting operation.

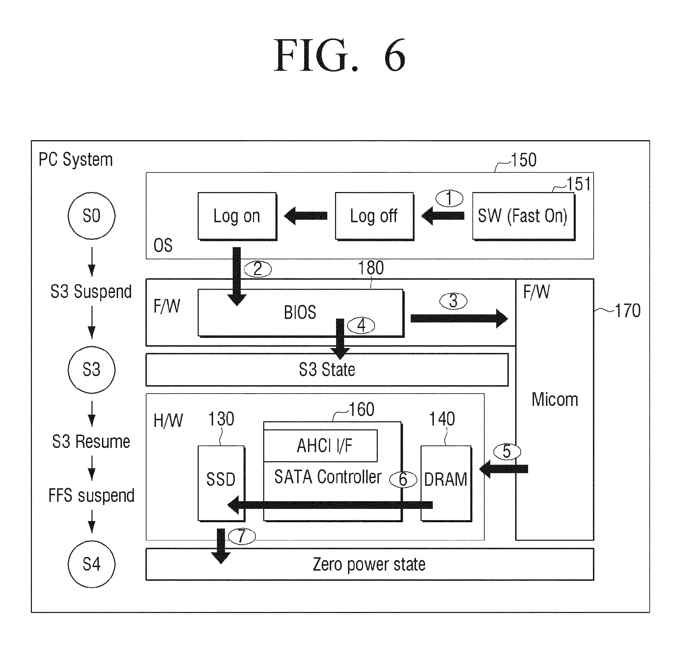

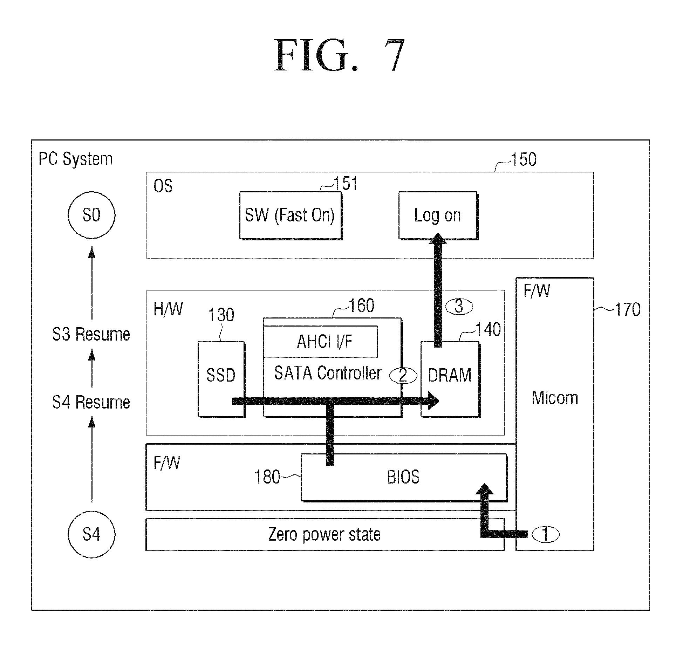

In the exemplary embodiment of the present invention, the control unit 150 is realized as one component, but the control unit 150 may be realized as a plurality of control elements, an example of which will be explained with reference to FIGS. 6 and 7.

Referring to FIG. 1, the electronic apparatus changes the operation mode of the operating system to a log off mode in response to the end command of a user and changes the operation mode of the electronic apparatus 100 to a maximum power saving mode. Therefore, a booting operation may be performed only through the operation of restoring data stored in the non-volatile memory 130. In addition, as data is stored in the non-volatile memory 130, there is no need to provide power to the volatile memory 140 in the process of saving power and thus, power consumption can be the same as that in the general end state.

FIG. 2 is a view illustrating an example of a user interface window 200 that can be displayed on the user interface unit 120 illustrated in FIG. 1.

Referring to FIG. 2, the user interface window 200 includes a first area 210 and a second area 220. Specifically, the user interface window 200 may be displayed when a user end command is input by a user through the user interface unit 120. Meanwhile, the user interface window 200 may be used as a window to set an end option. That is, the user interface window 200 may be used to select an option regarding an end mode before a user end command is selected. As such, an end operation according to a preset end mode may be performed without displaying the user interface window 200 of FIG. 2 in response to a user end command.

The first area 210 is an area to receive a selection of the first end command to perform fast booting. The first end command refers to a command to perform an end operation by changing the mode of the operating system to a log off mode and the operation mode of the electronic apparatus 100 to a maximum power saving mode, as described above.

The second area 220 is an area to receive a selection of the second end command to perform general booting. Herein, the second end command is a command to end an operating system in a general method.

Referring to FIG. 2, a user interface window 200 is displayed separately in response to a user end mode, but each area of FIG. 2 may be realized as icons, in which case, a general user interface window 200 may be displayed together.

FIG. 3 is a view to explain an operation mode of the electronic apparatus 100, according to an exemplary embodiment of the present invention.

Referring to FIG. 3, if an end command is input, the electronic apparatus 100 changes the operation mode of the operating system to a log off mode (i.e., an So mode) (operation S310). Herein, the So mode is a normal mode in which power is supplied to every component of the electronic apparatus 100. The operating system may have a log on mode (i.e., a general mode) in which a user is logged on and a log off mode in which a user is not logged on.

If the operation mode of the operating system is changed to a log off mode, the electronic apparatus 100 changes the operation mode of the electronic apparatus 100 to a maximum power saving mode using a Fast flash standby (FFS) suspend technology (operation S320), and then performs a booting mode S4 (operation S330). The FFS suspend technology will be explained with reference to FIG. 4.

If a booting command is input from a user in a maximum power saving mode, the electronic apparatus 100 changes the operation mode of the electronic apparatus 100 to FFS resume (operation S340), and accordingly, the electronic apparatus 100 is converted from the maximum power saving mode to a general mode. Since the electronic apparatus 100 has been converted to the maximum power saving mode from the log off mode, the operation mode of the operating system becomes the log off mode when the operating system is resumed. That is, even if a generation booting process is not performed, the electronic apparatus 100 may provide a log off mode which is the same as a general booting state.

FIG. 4 is a view to explain an operation to convert a current mode to a maximum power saving mode according to an exemplary embodiment of the present invention.

The FFS suspend technology will be explained with reference to a left flowchart as illustrated in FIG. 4. Specifically, if it is necessary to change the operation mode of the electronic apparatus 100 from normal mode to a power saving mode (operation S410), the operation mode of the operating system (OS) of the electronic apparatus 100 is changed to an S3 power saving mode (operation S420). Herein, the S3 power saving mode is a power saving mode where programs currently being executed by a user are stored in a volatile memory 140 and then, the power supplied to each component of the electronic apparatus 100 is cut off except the power supplied to the volatile memory 140. The S3 power saving mode is advantageous in that its resuming process is fast, but disadvantageous in that the power supply to the volatile memory 140 should be maintained.

If the operation mode of the electronic apparatus 100 is changed to the S3 power saving mode, the operation mode of the electronic apparatus 100 is changed directly to the S4 power saving mode without delay (operation S430). Specifically, data stored in the volatile memory 140 may be stored in the non-volatile memory 130 using an Advanced Host Controller Interface (AHCI) standard technology and power supply to each component of the electronic apparatus 100 may be cut off. That is, the operation mode of the electronic apparatus 100 may be changed to the S4 power saving mode. As such, the electronic apparatus 100 enters a zero power state (operation S440).

Accordingly, the S4 power saving mode is a power saving mode where programs currently being executed by a user are stored in the non-volatile memory 130 and the power supplied to each component of the electronic apparatus 100, including the volatile memory 140 is cut off. The S4 power saving mode is disadvantages in that its resuming process is slower than that of the S3 power saving mode, but it is advantageous in that it is not necessary to supply power to the volatile memory 140 continuously.

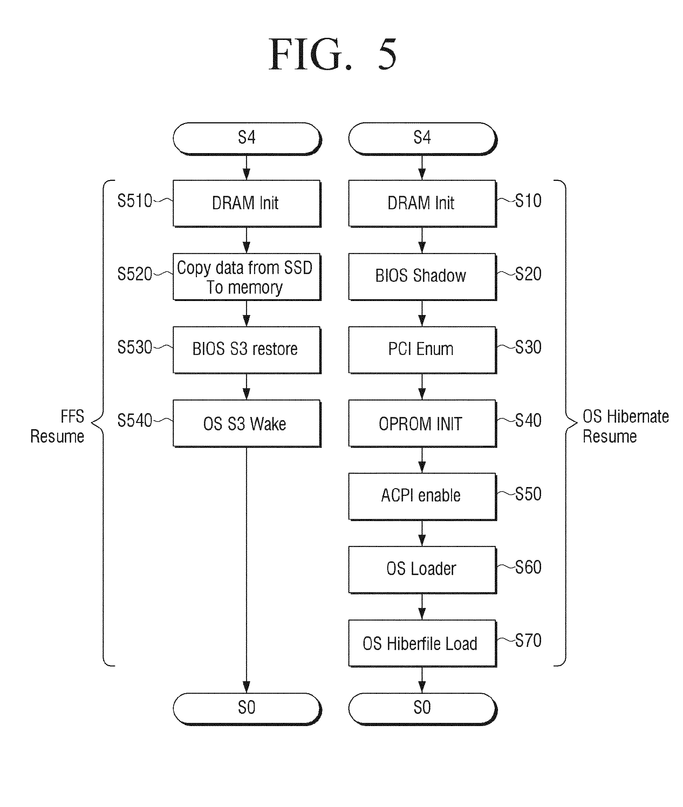

The FFS restoration technology will be explained using a right flowchart as illustrated in FIG. 4. If a restoration command (or a booting command, a.k.a., power-on) is input, the electronic apparatus 100 exits the zero power state (operation S440), and data of a volatile memory 140 stored in a non-volatile memory 130 may be restored to the volatile memory 140 (operation S450). If the data is restored to the volatile memory 140, the mode of the electronic apparatus 100 may be converted to a general mode in the same way as the restoration operation of the S3 power saving mode of the prior art (operation S460), and then the operating system changes to a log on mode (operation S470). A specific operation of the FFS restoration will be explained below with reference to FIG. 5.

FIG. 5 is a view to compare a booting operation in an S4 power saving mode of the prior art with a booting operation according to an exemplary embodiment of the present invention. Specifically, a left flowchart in FIG. 5 illustrates a booting operation according to an exemplary embodiment of the present invention, and a right flowchart in FIG. 5 illustrates a S4 restoration operation of the prior art.

Referring to the right flowchart of FIG. 5, a volatile memory 140 is initialized (operation S10), and a BIOS shadow operation that copies BIOS data into the non-volatile memory 130 is performed (operation S20).

While BIOS is posted, Peripheral Component Interconnect (PCI) initialization and initialization regarding all of the mounted apparatuses are performed and information regarding a connected apparatus is stored in a memory (operation S30).

Subsequently, Optional Read Only Memory (OPROM) is performed to search restoration data (operation S40), Advanced Configuration and Power Interface (ACPI) is enabled (operation S50), and OS loader is performed from a booting device (operation S60). Accordingly, a restoration operation where data stored in a non-volatile memory 130 is loaded onto a volatile memory 140 is performed (operation S70).

Referring to the left flowchart of FIG. 5, if a booting command (or a restoration command) is input in the maximum power saving mode (S4), a non-volatile memory 130 is initialized preferentially (operation S510) and data of a volatile memory 140 that is stored in a non-volatile memory 130 is restored to the volatile memory 140 (operation S520).

Accordingly, the operation state of the electronic apparatus 100 is restored to a state that is the same as the S3 power saving mode in the end process (operation S530), and the same restoration operation as that in the general S3 power saving mode is performed (operation S540).

As such, the booting operation according to an FIG. 5 does not perform hardware initialization which is performed during the S4 restoration of the prior art. That is, BIOS shadow, PCI enumeration, and OPROM INIT, which were performed during the restoration process in the S4 power saving mode of the prior art, are not performed in the exemplary embodiment of the present invention, and thus, a booting operation up to the log on screen of an operating system may be performed quickly.

FIG. 6 is a view to explain an end operation of an operating system according to an exemplary embodiment of the present invention.

Referring to FIG. 6, the electronic apparatus 100 includes the non-volatile memory 130, the volatile memory 140, the control unit 150, an AHCI interface unit 160, a microcomputer (micom 170), and a BIOS 180. Hereinafter, an end operation of an operating system using the above components will be explained.

First, a command to end an operating system is input by a user, and software 151, which operates on the operating system, converts the operation state of the operating system into a log off mode. Accordingly, the operating system is converted into a log off mode and accordingly, a program or a process which has been performed is terminated.

Subsequently, the software 151 may inform the BIOS 180 that an end command according to a first end mode (fast-on mode) is input, converts the operation mode of the electronic apparatus 100 to the S3 power saving mode, and converts the operation mode of the electronic apparatus 100 to the S3 power saving mode according to the instructions of the operating system. Although the exemplary embodiment illustrates that the BIOS 180 changes the operation mode of the electronic apparatus 100, the operation mode of the electronic apparatus 100 may also be performed in the control unit 150 in FIG. 1 or in the micom 170.

As soon as the operation mode of the electronic apparatus 100 is changed into the S3 power saving mode, the micom 170 may wake up a system and control the AHCI interface 160 to store data stored in a volatile memory 140 in a non-volatile memory 130.

Once data of the volatile memory 140 is stored in the non-volatile memory 130, the BIOS 180 may change the operation mode of the electronic apparatus 100 to the S4 power saving mode, such that the electronic apparatus 100 enters the zero power state.

Referring to FIG. 6, the control unit 150 and the micom 170 are illustrated as separate components, but the micom 170 and the control unit 150 may be configured as a single component. In addition, the exemplary embodiment illustrates that the non-volatile memory 130 and the volatile memory 140 directly transmit and/or receive data through the AHCI interface 160, but data may be transmitted and/or received between the non-volatile memory 130 and the volatile memory 140 via the control unit 150 or the micom 170.

FIG. 7 is a view to explain a booting operation according to an exemplary embodiment of the present invention.

Referring to FIG. 7, the electronic apparatus 100 may include the non-volatile memory 130, the volatile memory 140, the control unit 150, the AHCI interface unit 160, the micom 170, and the BIOS 180. Hereinafter, a booting operation of the operating system using the above components will be explained.

First, if a command to boot an operating system is input by a user, the system is turned on by the micom 170. As the operating system is turned on from the zero power state in the S4 power saving mode, the BIOS 180 performs an S4 restoration process. Subsequently, the BIOS 180 checks whether Fast-on is set, and if Fast-on is set, performs FFS restoration operation as illustrated in FIG. 5. Specifically, the BIOS 180 may control the AHCI interface unit 160 to restore back-up data in the non-volatile memory 130 to the volatile memory 140, and if the operation mode of the electronic apparatus 100 becomes the S3 power saving mode as the result of the restoration, the usual restoration operation may be performed with respect to the S3 power saving mode. Meanwhile, in the above exemplary embodiment, the BIOS 180 leads the FFS restoration process, but the FFS restoration process may be performed by the micom 170 or the control unit 180.

As such, the restoration operation according to FIG. 7 does not include various initialization operations which have been performed at the time of posting and OS loading and thus, the time to enter into a log-on mode of the operating system may be reduced in comparison with that in a general booting process.

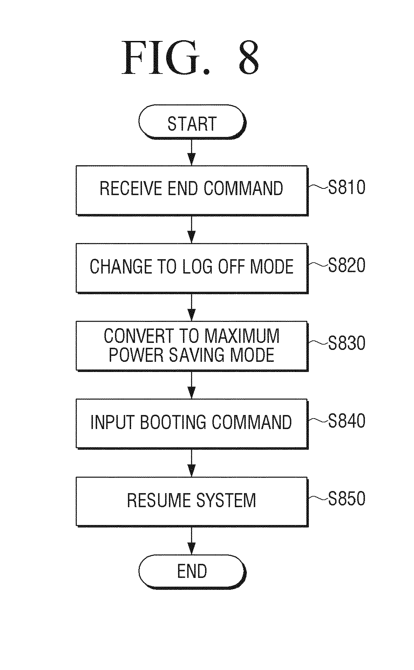

FIG. 8 is a flowchart to explain a method of controlling an electronic apparatus according to an exemplary embodiment of the present invention.

Referring to FIG. 8, first, a command is input to end the operation of an operating system (operation S810).

Subsequently, the operation mode of the operating system is changed to a log off mode (operation S820). Specifically, if the command to end the operation of the operating system is input, the operation mode of the operating system may be changed to a log off mode. Accordingly, if at least one of program or process is in operation, the program or process may be terminated, and information regarding the end mode may be stored in the BIOS.

The operation mode of the electronic apparatus to a maximum power saving mode (operation S830). Specifically, data stored in a volatile memory 140 is stored in a non-volatile memory 130, and power supplied to the non-volatile memory 130, the volatile memory 140 and the control unit may be cut off.

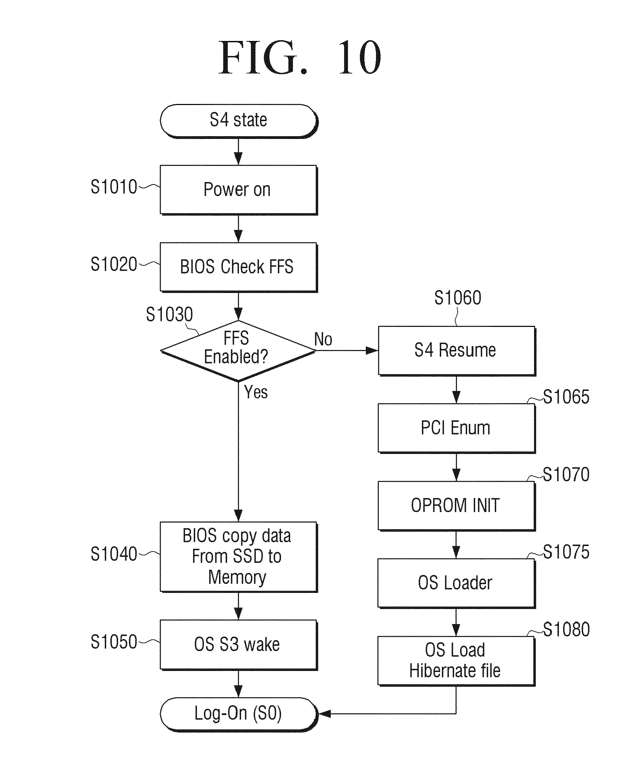

If a booting command is input (operation S840), data stored in the non-volatile memory 130 is restored to the volatile memory 140 (S850). The restoration operation will be explained later with reference to FIG. 10.

As described above, according to the method of controlling the electronic apparatus according to an exemplary embodiment of the present invention, the operation mode of the operating system is changed to a log off mode in accordance with an end command by a user, and the operation mode of the electronic apparatus 100 is changed to the maximum power saving mode in that state. Accordingly, a booting operation may be performed only through the process of restoring the data stored in the non-volatile memory 130. In addition, as data is stored in the non-volatile memory 130, there is no need to supply power to the non-volatile memory 130 in the power saving process. Accordingly, power consumption is the same as that in the general end state. The controlling method in FIG. 8 may be performed in an electronic apparatus having not only the configuration of FIG. 1 but also other configurations.

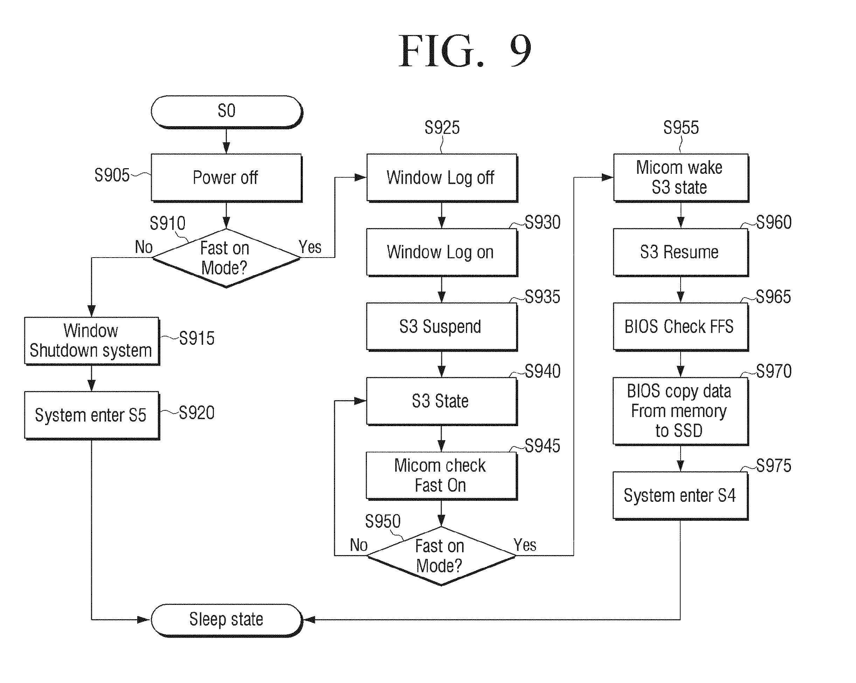

FIG. 9 is a flowchart to explain an end operation according to an exemplary embodiment of the present invention.

First, a command to end an operation of an operating system is input (operation S905).

The type of end mode of the end command is determined (operation S910). Specifically, whether the end command is a first end command for fast booting and a second end command for general booting may be determined. The determination may be performed upon a user selection. For example, if an end command is input from a user, a user interface window may be displayed as illustrated in FIG. 2 and an end mode is selected on the user interface window so that the type of end mode to be proceeded is determined. Such a selection operation may be performed in advance.

Meanwhile, if an end command by a user is the second end command (operation S910-No), general end operation may be performed (operation S915) and power supplied to the electronic apparatus 100 may be cut off (operation S920), thereby entering into a sleep state.

Alternatively, if an end command by a user is the first end command (operation S910-Yes), the operation mode of the operating system is changed to a log off mode (operation S925). As the operation mode of the operating system is changed to a log off mode, the program or process in operation may be terminated, and the operation mode of the operating system may become the log off mode (operation S930).

If the operation mode of the operating system becomes the log off mode, the operation mode of the electronic apparatus 100 is changed to the S3 power saving mode (operation S935).

If the operation mode of the electronic apparatus 100 is changed to the S3 power saving mode (operation S940), the first end command is notified to a micom (operation S945). Specifically, whether the mode is converted to the S3 power saving mode by a power saving operation or an end operation may be notified to the micom.

Based on the above information, the micom determines whether the power saving mode is a power saving mode in general or a power saving mode due to an end operation (operation S950). If the conversion of the operation mode of the electronic apparatus 100 is an operation due to the first end command rather than a general power saving mode (operation S950-Yes), the micom wakes up the system (specifically, wakes up only part of configurations, such as the non-volatile memory 130 and the volatile memory 140, operation S955), and information of the end mode may be stored in the BIOS (operation S965). Otherwise (operation S950-No), the operation mode of the electronic apparatus 100 is changed to the S3 power saving mode (operation S940). The data stored in the volatile memory 140 is stored in the non-volatile memory 130 (operation S970), and power supplied to each component of the electronic apparatus 100 may be cut off to enter into the maximum power saving mode (S4), thereby entering into the sleep/hibernation state.

FIG. 10 is a flowchart to explain a booting operation according to an exemplary embodiment of the present invention.

First of all, if a power-on command is input (operation S1010), whether the previous end operation was caused by the first end mode is determined based on pre-stored information (i.e., information regarding the end mode) (operation S1020).

If it is determined that the previous end operation is due to the first end mode (operation S1030-Yes), the data stored in the non-volatile memory 130 is restored to the volatile memory 140 (operation S1040), and a restoration operation of the S3 power saving mode may be performed (operation S1050).

Meanwhile, if the previous end operation is caused simply by entering into the maximum power saving mode (i.e., a general S4 power saving mode, operation S1030-No), a series of restoration operations S1060, S1065, S1070, S1075, and S1780 may be performed in the S4 power saving mode, thereby respectively performing an S4 Resume, a PCI Enum, an OPROM INIT, an OS Loader, and an OS Load Hibernate file. The restoration operations in the S4 power saving mode has been explained above with reference to FIG. 5, so further explanation will not be provided.

The present invention, such as the above controlling method, can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

Although a few embodiments of the present invention have been shown and described, it would be appreciated by those skilled in the art that changes may be made in this embodiment without departing from the principles of the invention, the scope of which is defined in the appended claims.

## Claims

1. An electronic apparatus having a plurality of operation modes, comprising:
a non-volatile memory and a volatile memory for storing data relating to an operating system;
a user interface unit to receive an end command to terminate an operation of the operating system; and
a control unit configured to change an operation mode of the operating system to a log off mode, to store in the non-volatile memory operating system data of the log off mode stored in the volatile memory, and to cut off power supplied to the electronic apparatus, if the end command is input.

2. The apparatus as claimed in claim 1, wherein the user interface unit displays a user interface window to receive a selection of a first end command to perform fast booting or a second end command to perform general booting,
wherein, if the first end command is input, the control unit changes the operation mode of the electronic apparatus to a maximum power saving mode.

3. The apparatus as claimed in claim 1 or claim 2, wherein the user interface unit includes a power button and receives the end command through the power button.

4. The apparatus as claimed in any one of claim 1 to claim 3, wherein the control unit terminates at least one process in operation in the operating system if the end command is input.

5. The apparatus as claimed in any one of claim 1 to claim 4, wherein, if the operation mode of the electronic apparatus is changed to an S3 power saving mode, the operation mode of the electronic apparatus is changed directly to an S4 power saving mode without being in a standby mode so that the operation mode of the electronic apparatus is changed to a maximum power saving mode.

6. The apparatus as claimed in any one of the preceding claims, wherein, the user interface unit arranged to receive a booting command, andwherein the control unit restores data of the volatile memory stored in the non-volatile memory to the volatile memory, when the booting command is input.

7. The apparatus as claimed in claim 6, wherein, when the booting command is input, the control unit initializes the volatile memory, restores data of a volatile memory stored in the non-volatile memory to the volatile memory, and converts an operation mode of the electronic apparatus to a normal mode.

8. The apparatus as claimed in claim 7, wherein the user interface unit displays a user interface window to perform a user log-in when the electronic apparatus is converted to a normal mode after the booting command.

9. A method of controlling an electronic apparatus having a plurality of operation modes, comprising:
receiving an end command to terminate an operation of an operating system;
if the end command is input, changing an operation mode of the operating system to a log off mode; and
storing in the non-volatile memory operating system data of the log off mode stored in the volatile memory and cutting off power supplied to the electronic apparatus.

10. The method as claimed in claim 9, further comprising:
displaying a user interface window to receive a selection of a first end command to perform fast booting or a second end command to perform general booting,
wherein the receiving an end command comprises receiving the first end command on the user interface window.

11. The method as claimed in claim 9 or claim 10, further comprising:
terminating at least one process in operation in the operating system.

12. The method as claimed in any one of claim 9 to claim 11, wherein the storing in the non-volatile memory operating system data of the log off mode stored in the volatile memory and cutting off power supplied to the electronic apparatus comprises:
changing an operation mode of the electronic apparatus to an S3 power saving mode; and
if an operation mode of electronic apparatus is changed to an S3 power saving mode, changing an operation mode of electronic apparatus to an S4 power saving mode without being in a standby mode.

13. The method as claimed in any one of claim 9 to claim 12, further comprising:
receiving a booting command; and
if the booting command is input, restoring data of the volatile memory stored in the non-volatile memory to the volatile memory.

14. The method as claimed in claim 13, wherein the restoring comprises:
initializing the volatile memory;
restoring data of a volatile memory stored in the non-volatile memory to the volatile memory; and
converting an operation mode of the electronic apparatus to a normal mode.

15. The method as claimed in claim 14, further comprising:
if the electronic apparatus is changed to a normal mode after the booting command, displaying a user interface window for user log-in.
